# EUROPÄISCHE PATENTSCHRIFT

(11) **EP 1 468 745 B1**
(45) Veröffentlichungstag und Bekanntmachung des Hinweises auf die Patenterteilung: **28.06.2006**
(21) Anmeldenummer: 03009081.5
(22) Anmeldetag: 19.04.2003
(51) Int. Cl.: B05B 7/12, F16K 31/122, F16K 23/00, B22D 17/20

(54) **Sprühelement für einen Sprühkopf**
Spray element for a sprayer head
Elément de pulvérisation pour une tête de pulvérisation

(43) Veröffentlichungstag der Anmeldung: 20.10.2004
(73) Patentinhaber: Oskar Frech GmbH + Co. KG, 73614 Schorndorf (DE)
(72) Erfinder: Erhard, Norbert, Dr.-Ing., 73547 Lorch (DE); Pschenitschni, Hubert, 73650 Winterbach (DE)
(74) Vertreter: Patentanwälte Ruff, Wilhelm, Beier, Dauster & Partner

(56) Entgegenhaltungen:
- DE-A- 3 238 201
- US-A- 1 986 206
- US-A- 3 987 810
- US-A- 4 365 754

## Beschreibung

Die Erfindung betrifft ein Sprühelement für einen Sprühkopf, insbesondere zum Besprühen der Formen von Druckgießmaschinen, mit einer Sprühdüse, die über ein Ventil mit dem zu versprühenden Medium und mit Druckluft beaufschlagbar ist, wobei das Ventil mit einem durch Steuerluft betätigbaren Steuerkolben versehen ist.

Ein Sprühelement dieser Art ist aus der DE 32 38 201 A1 bekannt. Dort ist die Ausgestaltung so getroffen, dass der Steuerkolben, der federbelastet ist, unter der Federkraft mit seinem einen Ende, an dem eine Abdichtung sitzt, gegen einen Ventilsitz gedrückt ist, vor dem eine Verbindungsbohrung zu einem Trennmittelanschluss mündet. Wird der Kolben daher durch Steuerluft entgegen der Federkraft bewegt, so öffnet sich der Ventilsitz und das zu versprühende Trennmittel kann durch eine zentrale Düsenöffnung austreten, wo es mit Hilfe von Druckluftstrahlen, die den Trennmittelstrahl einfassen, versprüht werden kann.

Ein Sprühelement vergleichbarer Art für Beschichtungsflüssigkeit ist aus der US 4,365,754 bekannt.

Ein gewisser Nachteil solcher Sprühelemente besteht darin, dass beim Abschalten der Trennmittelzufuhr zur Düsenöffnung, d.h. also dann, wenn die Abdichtung des Steuerkolbens gegen ihren Sitz gedrückt wird, das im Bereich der Austrittsöffnung noch vorhandene Trennmittel zu einem an sich unerwünschten Nachtropfen führen kann.

Der Erfindung liegt die Aufgabe zugrunde, ein Sprühelement der eingangs genannten Art so auszubilden, dass mit verhältnismäßig einfachen Mitteln ein Nachtropfen des zu versprühenden Mediums vermieden wird.

Zur Lösung dieser Aufgabe wird bei einem Sprühelement der eingangs genannten Art vorgesehen, dass der Steuerkolben neben der Sprühdüse mit beiden Enden in zylindrischen Abschnitten eines Gehäuses angeordnet ist, dass das erste Ende einen kleineren Durchmesser als das zweite Ende aufweist und mit einem Dichtring in einem zylindrischen Abschnitt vor einer mit dem zu versprühenden Medium beaufschlagten ersten Kammer geführt ist, dass das zweite Ende in einer zweiten zylindrischen Kammer geführt ist, in die eine Verbindungsbohrung zum Sprühventil mündet und die auf der vom ersten Ende des Steuerkolbens abgewandten Seite einen Anschluss für Steuerluft aufweist, und dass der Abstand der beiden Enden des Steuerkolbens so gewählt ist, dass der Dichtring in der Ausgangsstellung abdichtend im zylindrischen Abschnitt liegt und bei Steuerluftbeaufschlagung des zweiten Endes in die erste Kammer eintritt.

Durch diese Ausgestaltung wird daher bei Steuerluftbeaufschlagung des Steuerkolbens die Zufuhr des zu versprühenden Mediums zur Sprühdüse freigegeben und zwar durch die zweite zylindrische Kammer hindurch, so dass dann dieses Medium durch Druckluft versprüht werden kann. Wird dagegen die Steuerluftbeaufschlagung unterbunden, dann wird der Steuerkolben durch den Druck des zu versprühenden Mediums in seine Ausgangslage zurückbewegt, in der die Zufuhr des zu versprühenden Mediums zur Sprühdüse unterbunden ist. Gleichzeitig damit aber wird durch die Rückbewegung des zweiten Endes des Steuerkolbens in der zweiten zylindrischen Kammer das Volumen vergrößert und so ein gewisser Unterdruck erzeugt, der dazu führt, dass sich das in der Verbindungsbohrung zur Sprühdüse befindliche Medium in die zylindrische Kammer zurückbewegt, also quasi zurückgesaugt wird, so dass ein Nachtropfen sicher vermieden ist.

In Weiterbildung der Erfindung kann des Gehäuse für den Steuerkolben mit einem Ansatz zur Aufnahme der Sprühdüse versehen sein, wobei dieser Ansatz auch einteilig Bestandteil des Gehäuses sein kann.

In weiterer Ausgestaltung der Erfindung können dann alle Anschlüsse für Steuerluft zu versprühendes Medium und Druckluft auf der Seite des Gehäuses angeordnet werden, die von der Austrittsöffnung der Sprühdüse abgewandt sind. Es wird so ein montagefreundliches Modulbauteil erreicht, das sich in relativ einfacher Weise an entsprechende Sprühbalken anbauen lässt, die mit Führungskanälen für die einzelnen Medien versehen sind.

Die Erfindung ist in der Zeichnung anhand eines Ausführungsbeispieles dargestellt und wird im folgenden erläutert. Es zeigen:
- Fig. 1: eine Explosionsdarstellung eines Sprühkopfes, bei dem Sprühelemente nach der Erfindung eingesetzt sind und
- Fig. 2: eine vergrößerte Darstellung eines Schnittes durch ein Sprühelement der Fig. 1 in einer Ebene, die durch die Schnittlinie II-II in Fig. 1 angezeigt ist.

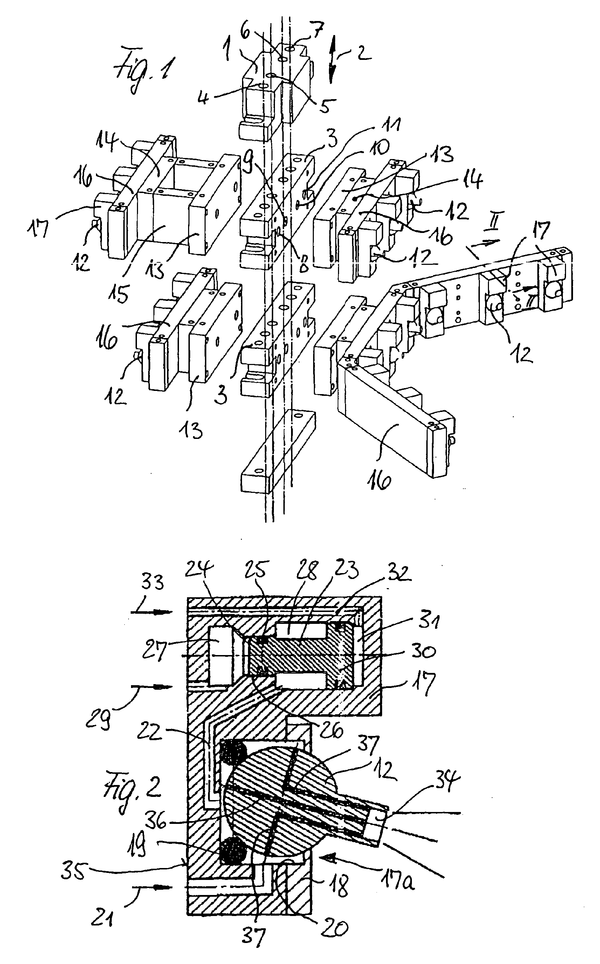

In Fig. 1 ist der grundsätzliche Aufbau eines Sprühkopfes gezeigt, für den Sprühelemente nach der Erfindung verwendbar sind. Ein im Sinn der Pfeile 2 beweglich geführter Teil 1 eines Armes ist an seiner Unterseite mit mehreren fluchtend zueinander angeordneten Verteilerblöcken 3 versehen, die alle identisch ausgebildet und in der Bewegungsrichtung 2 untereinander angeordnet sind. Die Verteilerblöcke 3 sind dabei dicht aneinander und dicht am Anschlußende des Armes 1 angeordnet.

Der Arm 1 kann in bekannter Weise mit einem steuerbaren Antrieb versehen sein, und er weist in seinem Inneren die schematisch angedeuteten Durchgangskanäle 4, 5, 6 und 7 auf, die jeweils zur Zufuhr von Trennmittel, Steuerluft und Druckluft dienen, die von außen bestimmbar ist. Diese Durchgangskanäle 4 bis 7 setzen sich in jedem Verteilerblock 3 nach unten fort, und es sind von diesen Kanälen jeweils quer abzweigende Versorgungskanäle vorgesehen, die an den Stellen 8, 9, 10 und 11 an den Seiten der Verteilerblöcke 3 münden. Von dort aus wiederum erfolgt der Anschluss zu Sprühdüsen 12 über Anschlussplatten 13 und Flanschblöcke 14, gegebenenfalls auch unter Zwischenfügung von Distanzstücken 15. Auf diese Weise wird es möglich, stockwerkweise, d.h. jeweils in einer Horizontalebene eines der Verteilerblöcke 3, Sprühdüsen 12 in verschiedener Weise anzuordnen, um den Sprühblock möglichst gut an die Innenform der beweglichen Formenhälfte und der festen Formenhälfte einer Druckgießmaschine anzupassen. Es ist bekanntlich erforderlich, nach jedem Gießvorgang diese Formenhälften mit Trennmittel zu besprühen oder auch mit Druckluft abzublasen.

Die Sprühdüsen 12 sind, wie Fig. 2 zeigt, in einem Ansatz 17a eines Gehäuses 17 angeordnet und beim Ausführungsbeispiel mit einem kugelförmigen Anschlussteil versehen, das von einem Deckel 18 gegen einen Dichtring 19 im Inneren einer Kammer 20 gedrückt wird, die auf der zum Deckel 18 gelegenen Seite des Dichtrings 19 mit Druckluft im Sinn des Pfeils 21 beaufschlagt wird und an ihrem Boden, auf dem auch der Dichtring 19 aufliegt, mit einem Verbindungskanal 22 in Verbindung steht, der zu einem Gehäuseteil innerhalb des Gehäuses 17 führt, in dem ein Steuerkolben 23 geführt ist. In diesem Teil des Gehäuses 17 ist ein erstes Ende 24 des Steuerkolbens 23 mit einem Dichtring 25 in einem zylindrischen Abschnitt 26 geführt, der eine erste Kammer 27 von einer zweiten Kammer 28 trennt.

Die erste Kammer 27 wird im Sinn des Pfeiles 29 mit Trennmittel beaufschlagt, dessen Druck an der Stirnfläche des ersten Endes 24 anliegt und den Steuerkolben 23 in der dargestellten Stellung hält, in welcher er mit seinem zweiten Ende 30, das einen größeren Durchmesser als das erste Ende 24 aufweist, an einem Anschlag der Kammer 28 rechts anliegt. Zwischen der freien Stirnseite des zweiten kolbenartigen Endes 30 und dem Gehäuse 17 verbleibt ein Raum 31, der über eine Bohrung 32 mit Steuerluft im Sinn des Pfeiles 33 beaufschlagbar ist, wenn ein entsprechender Impuls zur Steuerluftzufuhr vorliegt.

Es ist erkennbar, dass alle Anschlüsse für Druckluft (Pfeil 21) für Trennmittel (Pfeil 29) und für Steuerluft (Pfeil 33) auf der von der Austrittsöffnung 34 der Sprühdüse 12 abgewandten Seite des Gehäuses 17 an einer entsprechenden Montagefläche 35 vorgesehen sind. Das Gehäuse 17 lässt sich so in einfacher Weise an Sprühleisten 16 anbringen, in deren Inneren die entsprechenden Zufuhrkanäle verlaufen, die wiederum mit den Kanälen 4 bis 7 in der vorher angedeuteten Weise in Verbindung stehen.

Die Arbeitsweise des Sprühelementes nach Fig. 2 ist folgende:

In der dargestellten Lage des Steuerkolbens 23 ist die Verbindung zur Kammer 27 verschlossen. Das Trennmittel steht daher unter Druck in dieser Kammer 27 an. Druckluft kann im Sinn des Pfeiles 21 in die Kammer 20 eintreten und beispielsweise zu Trockenblaszwecken aus der Öffnung 34 der Sprühdüse 12 ausströmen. Möglich ist es aber auch, dass in diesem Zustand die Zufuhr von Druckluft von außen her unterbunden ist.

Wird Steuerluft im Sinn des Pfeils 33 in den Raum 31 gegeben, dann wird der Steuerkolben 23 aus seiner Lage nach Fig. 2 nach links verschoben, wobei der Dichtring 25 aus dem zylindrischen Abschnitt 26 austritt und das Trennmittel unter Druck in die Kammer 28 und von dort über den Verbindungskanal 22 in den Raum innerhalb des Dichtrings 19 eintreten kann. Das Trennmittel wird daher durch die mittlere Bohrung 36 der Sprühdüse 12 zu deren Austrittsöffnung 34 geführt, wo es mit Hilfe von Druckluft, die im Sinn des Pfeiles 21 zugeführt wird und durch Kanäle 37 außerhalb der Bohrung 36 austritt, zerstäubt und in einem Sprühstrahl abgegeben wird.

Soll der Sprühvorgang unterbrochen werden, so wird die Steuerluft 33 abgeschaltet und der Steuerkolben 23 bewegt sich unter dem Druck des Trennmittels in der Kammer 27 wieder in die in Fig. 2 dargestellte Lage zurück, in der zum einen die Verbindung zwischen der Kammer 28 und 27 abgeschlossen wird und daher kein Trennmittel mehr zugeführt werden kann, zum anderen aber auch noch ein Rücksaugeffekt auf das im Verbindungskanal 2 stehende Trennmittel ausgeübt wird.

Durch die Rückbewegung des Steuerkolbens in die in Fig. 2 dargestellte Lage wird nämlich nach dem Eintreten des Dichtungsringes 25 in den zylindrischen Abschnitt 26 das Volumen der Kammer 28 vergrößert, so dass der Rücksaugeffekt sich auch auf die Bohrung 36 auswirkt und sicher vermieden ist, dass das Trennmittel unerwünscht nach dem Abschaltvorgang nachtropft und versprüht wird.

Wie bereits erwähnt, kann die Einrichtung bei abgesperrter Trennmittelzufuhr auch zum Trockenblasen der Formen verwendet werden, wenn nämlich ausschließlich Druckluft im Sinn des Pfeiles 21 zugeführt wird, ohne dass Trennmittel mit austritt.

## Patentansprüche

1. Sprühelement für einen Sprühkopf, insbesondere zum Besprühen der Formen von Druckgießmaschinen, mit einer Sprühdüse (12), die über ein Ventil mit dem zu versprühenden Medium und mit Druckluft beaufschlagbar ist, wobei das Ventil mit einem durch Steuerluft betätigbaren Steuerkolben (23) versehen ist,
wobei der Steuerkolben (23) neben der Sprühdüse (12) mit beiden Enden (24, 30) im zylindrischen Abschnitten eines Gehäuses (17) angeordnet ist, wobei das erste Ende (24) einen kleineren Durchmesser als das zweite Ende (30) aufweist und mit einem Dichtring (25) in einem zylindrischen Abschnitt (26) vor einer mit dem zu versprühenden Medium beaufschlagten ersten Kammer (27) geführt ist, **dadurch gekennzeichnet, dass** das zweite Ende (30) in einer zweiten zylindrischen Kammer (28) geführt ist, in die eine Verbindungsbohrung (22) zum Sprühdüse (12) mündet und die auf der vom ersten Ende des Steuerkolbens (23) abgewandten Seite einen Anschluss (31) für Steuerluft aufweist, und dass der Abstand der beiden Enden (24, 30) des Steuerkolbens (23) so gewählt ist, dass der Dichtring (25) in der Ausgangsstellung des Steuerkolbens abdichtend im zylindrischen Abschnitt (26) liegt und bei Steuerluftbeaufschlagung des zweiten Endes (30) in die erste Kammer (27) eintritt.

2. Sprühelement nach Anspruch 1, **dadurch gekennzeichnet, dass** das Gehäuse (17) für den Steuerkolben (23) mit einem Ansatz (17a) zur Aufnahme der Sprühdüse (12) versehen ist.

3. Sprühelement nach Anspruch 2, **dadurch gekennzeichnet, dass** der Ansatz (17a) Teil des Gehäuses (17) ist.

4. Sprühelement nach Anspruch 1, **dadurch gekennzeichnet, dass** alle Anschlüsse für die Steuerluft (33), für das zu versprühende Medium (29) und für Druckluft (21) auf der Seite (35) des Gehäuses (17) angeordnet sind, die von der Austrittsöffnung (34) der Sprühdüse (12) abgewandt ist.

## Claims

1. Spray element for a spray head, preferably for spraying the molds of pressure casting machines, having a spray nozzle (12) which can be fed through a valve with the medium to be sprayed and with compressed air, the valve being provided with a control piston (23) operated by control air, the control piston (23) being arranged adjacent the spray nozzle (12) with both ends (24, 30) in cylindrical sections of a casing (17), wherein the first end (24) has a smaller diameter than the second end (30) and is guided with a sealing ring (25) in a cylindrical section (26) before a first chamber (27) loaded with the medium to be sprayed, **characterized in that** the second end (30) is guided in a second cylindrical chamber (28) into which a connecting bore (22) leads to the spray nozzle (12) and which comprises a connection (31) for control air at the side facing away from the first end of the control piston (23), and **in that** the distance between the two ends (24, 30) of the control piston (23) is chosen such that the sealing ring (25) in the starting position of the control piston lies sealingly in the cylindrical section (26) and, upon the application of control air to the second end (30), enters into the first chamber (27).

2. Spray element according to claim 1, **characterized in that** the housing (17) for the control piston (23) is provided with a projection (17a) to receive the spray nozzle (12).

3. Spray element according to claim 2, **characterized in that** the projection (17a) is part of the housing (17).

4. Spray element according to claim 1, **characterized in that** all connections for the control air (33), for the medium (29) to be sprayed, and for compressed air (21) are disposed on the side (35) of the housing (17) which faces away from the discharge orifice (34) of the spray nozzle (12).

## Revendications

1. Élément de pulvérisation pour une tête de pulvérisation, en particulier pour pulvériser un produit sur des moules de machines à coulée sous pression, avec une buse de pulvérisation (12) qui peut être alimentée en fluide à pulvériser et en air comprimé par l'intermédiaire d'une vanne, la vanne étant munie d'un piston de commande (23) pouvant être actionné par de l'air de réglage, le piston de commande (23) étant disposé à côté de la buse de pulvérisation (12) alors que ses deux extrémités (24, 30) se trouvent dans la section cylindrique d'un boîtier (17) et la première extrémité (24) ayant un diamètre inférieur à celui de la deuxième extrémité (30) et étant guidée avec une bague d'étanchéité (25) dans une section cylindrique (26) devant une première chambre (27) recevant le fluide à pulvériser, **caractérisé en ce que** la deuxième extrémité (30) est guidée dans une deuxième chambre cylindrique (28) dans laquelle aboutit une forure de liaison (22) avec la buse de pulvérisation (12) et qui comprend, sur le côté opposé à la première extrémité du piston de commande (23), un raccord (31) pour l'air de réglage et **en ce que** l'espacement entre les deux extrémités (24, 30) du piston de commande (23) est choisi de telle façon que, dans la position de départ du piston de commande, la bague d'étanchéité (25) se trouve dans la section cylindrique (26) en réalisant l'étanchéité et pénètre dans la première chambre (27) lorsque la deuxième extrémité (30) est soumise à l'action de l'air de réglage.

2. Élément de pulvérisation selon la revendication 1, **caractérisé en ce que** le boîtier (17) pour le piston de commande (23) est muni d'une embase (17a) servant à recevoir la buse de pulvérisation (12).

3. Élément de pulvérisation selon la revendication 2, **caractérisé en ce que** l'embase (17a) est une partie constituante du boîtier (17).

4. Élément de pulvérisation selon la revendication 1, **caractérisé en ce que** tous les raccords pour l'air de réglage (33), pour le fluide à pulvériser (29) et pour l'air comprimé (21) sont disposés sur le côté (35) du boîtier (17) qui est opposé à l'ouverture de sortie (34) de la buse de pulvérisation (12).
